# DEMANDE DE BREVET EUROPEEN

(11) **EP 3 663 985 A1**
(43) Date de publication de la demande: **10.06.2020**
(21) Numéro de dépôt: 18306646.3
(22) Date de dépôt: 07.12.2018
(51) Int. Cl.: G06K 19/077, B42D 25/41, B42D 25/351

(54) **PROCEDE DE FABRICATION D'UN DISPOSITIF COMPRENANT UN CORPS EN FORME DE CARTE ET UNE ZONE D'INFORMATION**

(71) Demandeur: Thales Dis France SA, 92190 Meudon (FR)
(72) Inventeur: BRAITHWAITE, Gregory, 13881 Gémenos Cedex (FR); KERGUEN, Elisabeth, 13881 Gémenos Cedex (FR); MORISOT, Laura, 13881 Gémenos Cedex (FR)
(74) Mandataire: Milharo, Emilien

(57) **Abrégé**

L'invention concerne un procédé de fabrication d'un dispositif (1, 1A, 1B) à puce électronique comprenant un corps en forme de carte et une zone d'information (Z1) dans le corps, contenant ou affichant des informations (5, 6) visibles depuis la surface du corps,
caractérisé en ce que ladite zone d'information (Z1) est recouverte par une couche (10) de matière, ladite couche (10) :
- laissant passer partiellement la lumière ou
- recevant une personnalisation ou impression graphique s'étendant dans ladite zone d'information (Z1) et hors de ladite zone d'information.

L'invention concerne également le dispositif obtenu.

## Description

### Domaine de l'invention.

L'invention concerne un procédé de fabrication d'un dispositif comprenant un corps en forme de carte et une zone d'information avec des numéros ou informations visibles de l'extérieur.

Le dispositif peut être typiquement une carte à puce notamment bancaire ou une carte biométrique.

En particulier, l'invention concerne également un procédé de fabrication d'une carte comportant des motifs graphiques visibles en surface du corps de carte. Les motifs comprennent généralement des formes géométriques en deux voire trois dimensions ou des caractères alphanumériques, sur un corps de carte. Les motifs peuvent par exemple être réalisés par impression notamment par jet de matière ou sérigraphie.

L'invention trouve application notamment dans les cartes bancaires comportant au moins une surface réservée à un embossage selon un standard des cartes à puce bancaires. Elle peut trouver application aussi dans les cartes bancaires conforme au standard des cartes bancaires planes (non embossées).

Outre des cartes bancaires, l'invention peut concerner des dispositifs sous forme de carte et/ou à puce, à couches ou feuilles laminées tels que des cartes d'identité ou des passeports, badges ou cartes de fidélité, de santé, d'accès ou de transport.

L'invention peut concerner aussi la personnalisation ou le marquage de cartes à puce en général avec des motifs de personnalisation (distincts des caractères ou données alphanumériques (logos d'entreprise, dessins...)

### Art antérieur.

Les cartes bancaires comprennent une zone normalisée d'embossage pour recevoir des données de personnalisation bancaire tel un numéro bancaire, une date d'expiration, sous forme d'embossage. L'embossage consiste à poinçonner la carte avec un poinçon comportant un caractère (ou motif géométrique) à reproduire sur la carte. Une face de la carte comporte le caractère / motif en creux et l'autre face opposée comporte le même caractère en relief en dépassant de la surface de la carte.

D'autre part, il est connu de réaliser une personnalisation graphique sur le corps de carte notamment par impression 3D de caractères par jet d'encre.

### Problème technique.

La fraude Bancaire constitue une menace constante : caméras sur les guichets automatiques ou des systèmes de paiement, vols de carte, etc... une fois que le pirate a le numéro de carte de crédit d'un titulaire, il est facile pour lui de voler à partir du compte correspondant ou faire des achats en ligne sous l'identité du titulaire.

En outre, la méthode d'embossage des numéros en relief tel que nous le connaissons à l'heure actuelle est très contraignante au niveau de la fabrication. En effet, la zone d'embossage doit être dégagée de toute l'électronique (pour ne pas l'abîmer pendant le processus d'embossage en relief), et cette zone d'embossage doit être exclue de la zone d'impression graphique de la carte.

Ainsi, cette zone d'embossage limite la mise en place des composants, leur taille, le positionnement de l'antenne pour éviter une coupure éventuelle (et donc ses propriétés électroniques ou performances de communication radiofréquence), l'aspect visuel de la carte, etc...

Un produit existant qui pourrait résoudre en partie le problème de sécurité est la carte graphique. Elle comporte un écran d'affichage, qui peut être activé avec les boutons sur le corps de la carte. Actuellement, il permet à l'utilisateur de voir le solde du compte, ou de générer un nombre à usage unique (OTP) pour les achats en ligne. Cette carte peut comprendre un capteur biométrique pour améliorer la sécurité (lorsque le propriétaire met le doigt sur le capteur, le numéro de carte s'affiche sur l'écran).
Toutefois, cette solution est assez contraignante concernant la conception de la carte. L'écran peut être assez encombrant et inesthétique.

On connait également une solution de carte avec afficheur (de la société ASP), qui est associée avec une application logicielle d'un téléphone portable. Pour afficher un numéro de carte bancaire et la date de péremption sur l'écran de la carte et générer un cryptogramme pour un achat, la carte doit être activée via un bouton ON/OFF sur sa surface et connectée par « Bluetooth » au téléphone portable de l'utilisateur afin de vérifier son identité.

Toutefois, pour fonctionner, cette solution requiert l'utilisation du téléphone portable et d'une application appropriée. La carte ne peut donc pas être utilisée à elle seule, ce qui n'est pas très pratique.

Les inventeurs ont pensé résoudre les problèmes liés à l'embossage par une simple impression des numéros sur le corps de la carte, mais ce serait moins efficace en termes de sécurité (beaucoup plus facile à reproduire pour fraudes) et le numéro serait toujours visible pour les fraudeurs.

La demande de brevet KR20120044409 (A) décrit une carte comportant un écran du type AMOLED (Amorphous Matrix Organic LED) en anglais) pour afficher des informations de paiement.

La demande de brevet US2017289127 (A1) décrit une fonction permettant d'accéder au numéro de carte bancaire et/ou son cryptogramme via une authentification biométrique sur un capteur de la carte.

L'invention propose de résoudre tout ou partie des problèmes évoqués ci-dessus.

Elle a pour objectif de résoudre notamment les problèmes liés à l'embossage, d'empêcher la fraude bancaire et augmenter le niveau de sécurité, tout en gardant un aspect esthétique.

### Résumé de l'invention.

Selon un mode préféré de réalisation, l'invention peut proposer une carte luminescente qui par défaut n'a pas de numéro visible ; Le numéro de carte peut être de préférence affiché par une bande AMOLED laminée dans le corps de la carte et activée par un capteur biométrique notamment un capteur d'empreinte digitale.

La carte peut être alimentée par une petite batterie et peut être rechargée en étant connectée à un lecteur à contacts électriques ou avec un chargeur à induction. La batterie peut être aussi conçue pour que son cycle de vie dure le temps nécessaire (1 à 3 ans)

Selon un mode de réalisation, l'invention peut consister à faire disparaître l'écran et/ou les numéros en absence de besoin d'affichage et de les faire apparaître en cas de besoin. En temps normal, (ou par défaut) la surface consacrée à l'écran et/ou aux caractères alphanumériques (surface d'affichage) présente le même aspect visuel que le reste de la surface de la carte. Toute cette surface de l'affichage peut avoir les mêmes attributs visuels et/ou utilisations que le reste de la surface du corps de carte.

Selon un mode de réalisation, la carte peut comporter une couche au-dessus de la surface d'affichage qui est translucide (et non transparente) en absence de besoin d'affichage. Ainsi, l'écran et ou les caractères ne sont pas visibles. La surface quasi-totale de la carte a le même aspect visuel.

Puis en cas de besoin d'affichage, soit la couche devient transparente au moins au niveau de l'affichage et/ou de l'écran soit les caractères sont affichés et deviennent visibles à travers la couche translucide ou transmettant partiellement la lumière. Ainsi, la carte ne comporte pas qu'une ou plusieurs couche(s) totalement en matière transparente pour recouvrir l'afficheur ou la zone d'affichage. Visuellement, la surface de la carte est sensiblement homogène entre la zone d'affichage et la zone adjacente à l'affichage en ce sens où la zone d'affichage ou l'écran n'est pas bien visible à travers la couche en absence d'affichage actif.

Le taux de translucidité ou de transmission partiel de la lumière peut être déterminé notamment en fonction de la matière de la couche et de son taux de transmission. Le taux peut être aussi en fonction de l'intensité lumineuse ou contraste ou dimensions des caractères de l'affichage. La couche externe ou de recouvrement de l'afficheur et/ou de la zone d'affichage peut avoir par exemple une épaisseur d'environ 20 à 100 µm. Selon l'opacité ou translucidité de la couche de recouvrement, elle peut être associée à une couche transparente de manière à laisser passer plus de lumière. La couche translucide ou partiellement opaque peut représenter 5 à 95 % de l'épaisseur de la couche de recouvrement, le reste peut être transparent (ou inversement).

A cet effet, l'invention a pour objet un procédé de fabrication d'un dispositif (notamment à puce électronique) comprenant un corps en forme de carte et une zone d'information dans le corps, contenant ou affichant des informations visibles depuis la surface du corps,
caractérisé en ce que ladite zone d'information est recouverte par une couche de matière, ladite couche :
- laissant passer partiellement la lumière ou
- recevant une personnalisation ou impression graphique s'étendant (à cheval) dans ladite zone d'information et hors de ladite zone d'information.

Selon des caractéristiques de modes de réalisation, ladite zone d'information appartient :
- à un afficheur disposé à l'aplomb d'une zone réservée de formation d'embossage ou de numéros bancaires, conforme à un standard de carte à puce bancaire,
- ou à une couche de matière interne du corps du dispositif configurée ou agencée dans ledit corps de manière à recevoir un marquage par laser.

Ainsi, on utilise la zone réservée d'embossage pour recevoir un afficheur et afficher le numéro de carte bancaire. L'information peut être affiché ou apparaitre à l'instant désiré sur commande ou intervention de l'utilisateur.

Selon d'autres caractéristiques :
- La carte ou le dispositif comporte une personnalisation graphique (15, 16) qui s'étend au moins en partie ou en totalité sur l'afficheur (7) ou sur ladite zone d'information. Les numéros sont affichées électroniquement sur un écran (ou afficheur) ;
- Les numéros sont formés dans une couche de matière au-dessus d'une source lumineuse ;
- La couche de matière est sensible au laser ;
- La couche de matière sensible au laser est noircie à l'exception des informations ou seules les informations sont noircies ;
- La carte (ou le dispositif) peut comporter un film à opacité contrôlée électriquement, disposé au-dessus des informations marquées ou affichées dans la carte ;

Ainsi, la surface de l'afficheur peut être utilisée pour effectuer une personnalisation graphique notamment par technique d'impression graphique. Cela augmente la surface de personnalisation graphique et permet de recevoir plus d'informations visuelles de sécurité à la surface de la carte. La dimension des numéros par rapport à ceux des éléments graphiques et/ou le contraste entre eux est choisi de manière à avoir un contraste suffisant pour une lisibilité des numéros.
- L'afficheur est disposé sous une feuille ou un film de couverture ou de recouvrement recouvrant toute la surface de la carte et de l'afficheur ;
- L'afficheur peut être affleurant à une surface principale externe du corps de carte et en ce qu'un marquage de personnalisation s'étend à la fois sur l'afficheur et sur ladite surface principale externe du corps de carte ; Il peut ne pas y avoir de feuille de couverture ou de recouvrement commune recouvrant l'afficheur et le reste du corps de carte ;
- L'afficheur peut être formé par une technique AMOLED ;
- La feuille de couverture externe peut être translucide ou opaque ou semi-opaque ;
- La feuille de couverture ou de recouvrement présente un coefficient de transmission de la lumière compris entre 0,4 et 1, à ajuster selon l'intensité souhaitée. En effet, il ne doit pas être inférieur à 0,4 au risque de ne plus laisser passer la lumière générée par l'écran AMOLED. Le coefficient minimum de transmission peut varier selon le type d'écran ainsi que l'intensité de la lumière émise.
Le coefficient minimum de 0,4 peut être ajusté en fonction du type d'écran AMOLED.

L'invention a également pour objet un dispositif (notamment à puce électronique) comprenant un corps en forme de carte et une zone d'information dans le corps contenant ou affichant des informations visibles depuis la surface du corps, caractérisé en ce que ladite zone d'information appartient :
- à un afficheur disposé à l'aplomb d'une zone réservée de formation de caractères embossés ou de formation de numéros bancaires, le dispositif ou la zone réservée étant conforme à un standard de carte à puce bancaire, ou
- à une couche de matière interne du corps du dispositif configurée ou agencée dans ledit corps de manière à recevoir un marquage par laser.
Le standard (ou norme) peut correspondre au standard (ou norme) ISO/IEC 7811-3.

La carte peut comporter un motif de personnalisation graphique qui s'étend au moins en partie ou en totalité au-dessus de l'afficheur ou au-dessus des numéros affichés. Ainsi, la surface même de l'écran peut être utilisée pour recevoir une personnalisation sans être limitée à la bordure de l'afficheur.

L'affichage peut être suffisamment lumineux ou contrasté pour apparaitre en surface de la carte même à travers une feuille de couverture non transparente.

### Brève description des figures.

- La figure 1 illustre une carte à puce bancaire de l'art antérieur ;
- La figure 2 illustre un procédé de fabrication d'une carte bancaire conforme à un mode préféré de mise en oeuvre montrant la position et assemblage d'un afficheur dans le corps de carte ;
- Les figures 3 et 4 illustrent une utilisation d'une carte conformément à l'invention ;
- La figure 5 illustre 5 illustre de manière plus détaillée un mode de réalisation d'une carte à puce 1A sensiblement configurée selon un principe similaire de la figure 2 ;
- La figure 6 illustre une carte 1B configurée selon un principe alternatif à celui de la figure 5 ;
- La figure 7 illustre des étapes de réalisation d'une carte conforme à l'invention et au mode de la figure 6 ;
- La figure 8 illustre une vue en coupe du dispositif de la figure 6 ;
- La figure 9 illustre une couche ou zone laser L2 du dispositif ou d'une carte qui est noircie par laser.

### Description.

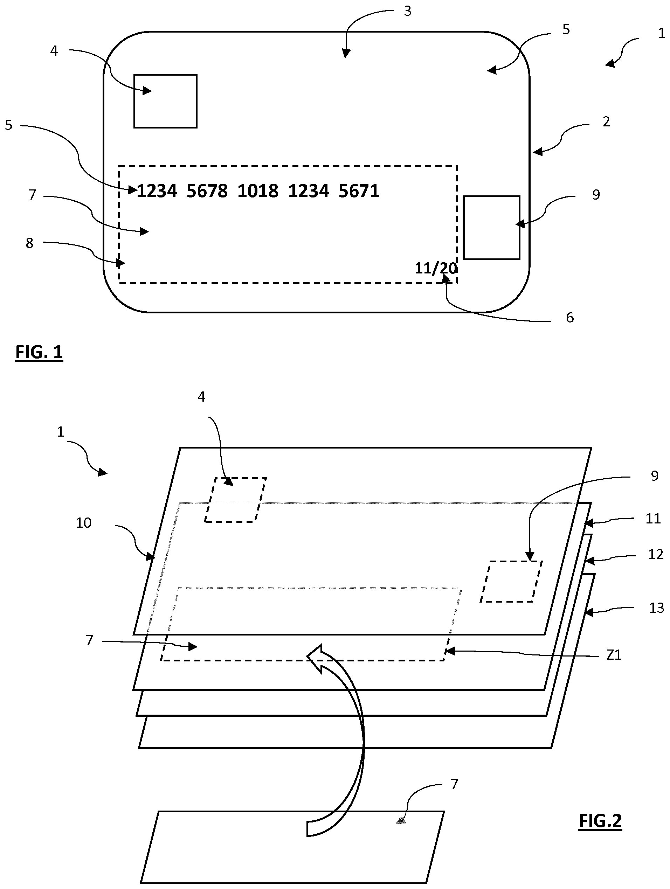

A la figure 1 est illustré, un dispositif de l'invention, sous forme d'une carte bancaire 1, obtenu par la mise en oeuvre d'un procédé de fabrication selon un mode de l'invention. Le dispositif (ou carte à puce) 1 comprend un corps de carte 2 et des numéros 5 visibles à la surface 3 du corps 2 de dispositif (ou de carte). Les numéros sont ici affichés sur un afficheur 7 par affichage sur un afficheur 7 de la carte, (plutôt qu'embossés (ou en relief) ou être réalisés par impression jet de matière notamment 2D ou 3D comme dans l'art antérieur.

La carte bancaire peut comprendre un module 4 à puce circuit intégré avec des contacts électriques affleurant comme interface de communication avec un lecteur à contacts. Elle peut comprendre une antenne de communication radiofréquence (non représentée).

Elle peut comprendre comme ici un capteur biométrique 9 d'empreinte digitale. Alternativement dans tous les modes de réalisation, la carte peut comporter un autre type de capteur biométrique (reconnaissance vocale ou autre). Elle peut comprendre une interface quelconque avec un utilisateur permettant de l'authentifier, tel que par exemple un clavier pour une entrée de code d'identification.
Le cas échéant, la carte comporte juste un interrupteur à la place du capteur pour déclencher l'affichage du numéro juste au bon moment à l'abri des regards. L'interrupteur peut être actionné par capteur de flexion tel qu'un capteur piézoélectrique.

L'affichage peut être déclenché par soumission de la carte à une source d'énergie telle qu'un champ électromagnétique d'un lecteur NFC.
La source d'énergie peut être un lecteur à contacts électriques contactant les plages du module 4 de la carte et configuré pour permettre la lecture des informations (lecteur transparent ou ne recouvrant pas les informations.
Ainsi, la carte peut ne pas comprendre de capteur 9 ni de batterie 23.

Les numéros référencés 5 forment un numéro de carte bancaire classique. Les numéros référencés 6 forment la date d'expiration de la carte bancaire. Ces numéros 5 et 6 sont affichées dans une zone qui était réservée ou dédiée à de l'embossage conformément au standard carte bancaire ou de paiement EMV. Le nom et prénom sont normalement positionnés dans la partie inférieure du cadre 8.

Selon une caractéristique du mode préféré, l'afficheur 7 peut être placé dans une zone 8 réservée ou dédiée de l'embossage ou de formation de numéros bancaires ; La zone 8 a un emplacement conforme à un standard de carte à puce bancaire notamment EMV. L'afficheur est placé ici entre les feuilles ou couches 10 et 11.

La carte comporte ici une surface principale 3 supérieure et une surface opposée d'épaisseur normalisée égale à 0,78 mm Les dimensions correspondant de préférence à un standard ISO 7616 des cartes à puce. Toutefois, les cartes visées peuvent avoir des dimensions différentes de celles préconisées par le standard, notamment plus petites.

Alternativement, l'invention peut viser également les cartes obtenues par moulage / surmoulage ou injection, ou injection mono ou multi matières ou co-extrusion multi matières. Donc une des couches peut être de couleurs différentes. Elle peut le cas échéant comporter un corps de carte constitué d'une couche homogène de matière (hormis, l'impression et couche de protection). Dans ce cas, c'est une couche unique qui est embossée. La carte peut être moulée ou injectée plutôt que laminée (stratifiée). Elle peut comporter une impression graphique en surface associée ou non à un vernis ou couche de protection (overlay).

A la figure 2 est illustré un assemblage de couches laminées / stratifiées ensemble pour former un corps de carte de la figure 1. L'assemblage comprend des couches de protection externes supérieure 10 et inférieure 13 ; Il comprend deux couches ou feuilles principales de coeur 11, 12 prises en sandwich entre les couches 10 et 13. Ces couches sont généralement en matière plastique couramment utilisée dans l'industrie de la carte à puce, tels que PC, PET, PE, ABS et PVC.

Selon une caractéristique, l'afficheur 7 peut être disposé sous une feuille 10 ou film de couverture ou de recouvrement recouvrant toute la surface de la carte et de l'afficheur. La couche, feuille ou film peut être de préférence partiellement opaque ou translucide.
En particulier, une zone d'information (où apparait l'information) est recouverte par une couche de matière translucide ou partiellement opaque ou configurée pour recevoir une personnalisation ou impression graphique s'étendant au moins en partie sur le reste de la carte.
- Alternativement, l'afficheur 7 peut être affleurant à une surface principale externe 3 du corps de carte. La surface peut être celle de la couche 10, l'afficheur étant par exemple monté ou encarté dans une cavité débouchant en surface de la couche 10.

Selon une caractéristique d'un mode préféré de mise en oeuvre de l'invention, la zone d'information Z1 est recouverte par une couche 10 de matière. La couche 10 peut être configurée pour laisser passer partiellement la lumière (en étant semi opaque ou translucide par exemple). Alternativement la couche 10 peut recevoir ou être configurée pour recevoir une personnalisation ou impression graphique s'étendant à la fois dans (ou sur) la zone d'information Z1 et hors de ladite zone d'information dans (ou sur) la surface résiduelle du corps en forme de carte.

Les composants 4 et 9 (module et capteur) peuvent être également montés et connectés par encartage dans des cavités ménagées à travers la couche 10 et d'autres couches telles que 11 et 12. Les différents composants 7, 4 et 9 peuvent être connectés électriquement à un circuit imprimé flexible fin comprenant notamment un microprocesseur et une batterie (non représentés).

Selon une caractéristique, la carte peut comprendre de préférence un marquage de personnalisation qui s'étend à la fois sur l'afficheur 7 et sur ladite surface principale externe 3 du corps de carte. Le marquage peut être une impression graphique telle qu'un fond uniforme 15 ou un motif 16 tel qu'une étoile, qui s'étend au moins en partie ou en totalité sur l'afficheur 7 ou sur lesdits numéros affichés 5.

L'afficheur peut être formé par toute technologie connue de la carte à puce. Il peut avantageusement être formé par une technique AMOLED pour avoir notamment de la luminosité et économiser la batterie.

L'impression 15, 16 peut être imprimée sur une face des couches 9 ou 10 à leur interface. Le cas échéant, un vernis protecteur peut les recouvrir.
L'impression peut recouvrir uniquement les bords de l'afficheur ou la totalité. L'impression peut s'arrêter juste avant de recouvrir les numéros. Ainsi, les zones non actives de l'afficheur, situées généralement de quelques millimètres (1 - 5 mm) au niveau de la bordure de l'afficheur, peuvent être masquées par de la personnalisation graphique.

La feuille 10 peut être choisie de manière à assurer une visibilité des numéros affichés à travers la feuille selon la technologie d'affichage retenue. La feuille peut être translucide, opaque ou semi-opaque. Par exemple la feuille de couverture ou de recouvrement peut présenter un coefficient de transmission de la lumière compris entre 0,4 et 1.

La feuille de couverture ou de recouvrement 10 peut être configurée (ou comprendre une impression colorée ou à motif au verso), de manière à uniformiser la transparence ou opacité de la feuille afin éviter de distinguer la délimitation périphérique de l'afficheur 8.

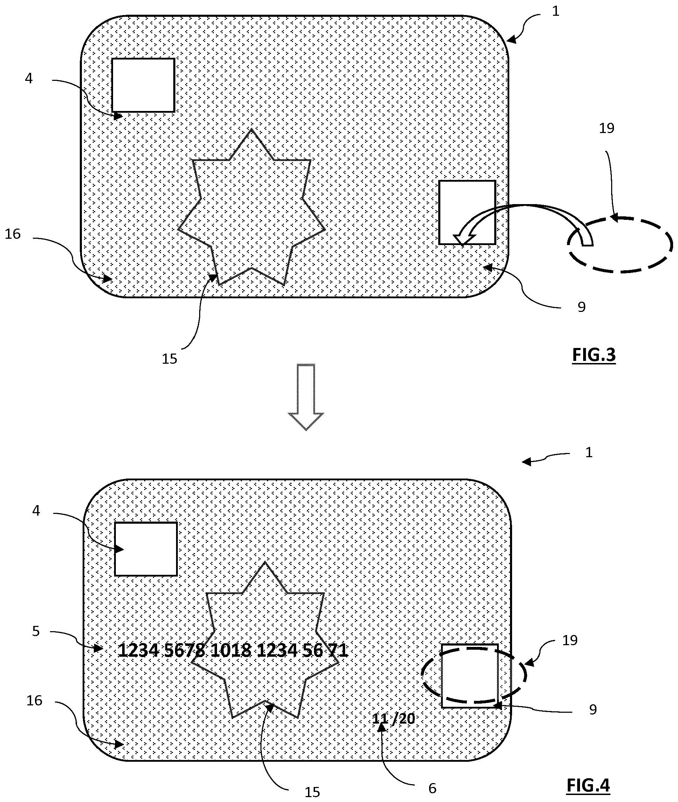

En relation avec les figures 3 et 4, on décrit maintenant une utilisation d'une carte de paiement ou bancaire conformément à l'invention.
De manière générale, les mêmes références, d'une figure à l'autre, représentent des éléments identiques ou similaires.

Un utilisateur désirant effectuer une transaction avec un numéro de carte bancaire, dispose de la carte à puce 1. La carte dispose d'un module 4 et d'un capteur biométrique. La carte 1 présente une personnalisation graphique relativement uniforme 16 ou de fond sur la couche externe 10. Elle présente également une personnalisation graphique non uniforme (étoile 15) dont l'épaisseur du trait de contour est plus étroite que celle des caractères formant les numéros. Ainsi, malgré une superposition, les caractères des numéros demeurent lisibles.

A la figure 4, l'utilisateur présente son doigt 19 sur le capteur 9 pour s'authentifier. En cas d'authentification réussie, un gestionnaire d'affichage et/ou microcontrôleur de transaction de la carte du circuit imprimé interne de la carte commande l'affichage du numéro de carte bancaire 5 sur l'afficheur 7. Le numéro apparait à travers la couche 10 et la personnalisation graphique uniforme 16 et non uniforme 15.

La carte peut ne pas comporter de personnalisation graphique 16 mais se contenter d'une couche de matière de couleur ou d'aspect uniforme (neutre ou colorée) plus ou moins opaque vis-à-vis de lumière réfléchie sur la surface. Elle peut comprendre par exemple une couche métallique, acier, platine, or, aluminium très fine d'épaisseur configurée de manière à permettre le passage de la lumière ou une couche de bois naturel ou synthétique d'épaisseur configurée de manière à permettre le passage de la lumière.

La lumière émise par les diodes de type AMOLED traverse suffisamment la couche 10 pour être vue par transmission à travers la couche 10.
La carte peut ne pas comprendre de composant visibles sur la surface 3 (composant 4 ou 9) et avoir une personnalisation graphique qui recouvre toute la surface de la carte ou du moins une très grande majorité.

Cela permet d'avoir une personnalisation plus étendue non interrompue par la présence de numéros au repos. Ainsi, au repos, la carte peut ne pas paraitre une carte bancaire. Cela augmente d'autant la sécurité ou tentative de vol. En outre, le fait que le numéro n'apparaisse que sur commande permet de limiter des tentatives de vol de numéro.

Le cas échéant, une photographie au choix de l'utilisateur ou tout autre image, graphisme peut être imprimée et apparaitre sans discontinuité quand le numéro n'est pas affiché.
Ainsi, en même temps que le niveau de sécurité amélioré, la carte permet une augmentation de la surface de personnalisation. Elle permet de ne pas interrompre ou entrecouper l'image ou un motif de personnalisation sur la carte par la présence des numéros de la carte.

Par voie de conséquence, l'esthétique de la carte en est améliorée en même temps que la sécurité grâce à une surface support plus étendue.

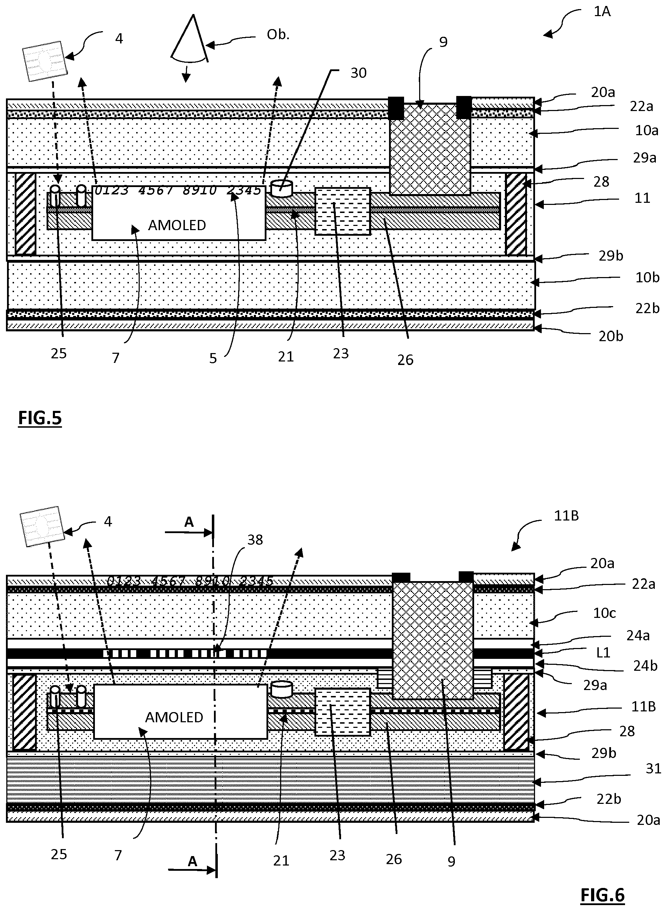

A la figure 5 illustre de manière plus détaillée un mode de réalisation d'une carte à puce 1A sensiblement configurée selon un principe similaire de la figure 2. Elle peut comprendre en détail de haut en bas:
- Un overlay 20a (ou couche de recouvrement transparente) ;
- une impression graphique 22a notamment offset ou jet d'encre ;
- une feuille plastique 10a notamment en PVC blanc d'épaisseur 100 µm; Son coefficient de transmission de la lumière est à ajuster selon l'intensité souhaitée ; Il peut par exemple être compris entre 0,4 et 0,7. Un compromis résulte du fait que la lumière générée par l'écran AMOLED doit passer à travers cette couche 10a et le fait que les numéros ne doivent pas être visibles directement uniquement par exposition de la carte à la lumière extérieure.
- une couche d'adhésif 29a ;
- une couche de résine 11 comprenant des éléments actifs électrique / électronique ;
- une couche d'adhésif 29b ;
- une seconde feuille plastique 10b notamment en PCV blanc de 100 µm;
- une impression graphique 22b notamment offset ou jet d'encre ;
- Un overlay 20b (ou couche de recouvrement transparente) ;
- La couche centrale en résine 11 comprend un circuit imprimé électronique 26. Ce dernier comporte ou est relié à une batterie 23, une interface de communication à antenne 21, un microcontrôleur et mémoires 30 relatifs au capteur biométrique 9, des plots d'interconnexion 25 pour interconnecter le PCB 26 et/ou antenne à un module électronique de carte à puce de type à contacts et/ou sans contact 4, un écran 7 notamment de type AMOLED;

La dimension de l'écran 7 recouvre de préférence la zone affectée au numéro (PAN) ou information 5 de la carte. La couche centrale 11 peut comprendre un cadre de positionnement 28 du circuit imprimé 26.

La carte comporte ici une unité de traitement graphique 30 permettant de piloter une matrice de lignes et colonnes pour un affichage d'information ou d'image sur l'afficheur AMOLED.

L'information s'affiche sur l'écran 7 et est visible par un observateur (Ob.) à travers les couches transparentes disposées au-dessus de l'écran.
L'impression de personnalisation (étoile 15) ou de décoration (fond sensiblement uniforme 16) peut être effectuée notamment au niveau de la couche 22a de manière à ne pas gêner la lecture de l'information 5.

La figure 6 illustre une carte 1B configurée selon un principe alternatif à celui de la figure 5. Sur toute la description, des mêmes numéros de référence désignent des éléments identiques ou similaires d'une figure à l'autre.

La structure de la carte de la figure 6 diffère de celle de la figure 5 principalement par la réalisation physique des informations 5, 6 à l'intérieur de la carte.
Dans un mode pratique de réalisation, le procédé prévoit de réaliser ces informations dans une feuille ou couche laser L1 au-dessus du PCB 26. Une telle feuille a la propriété de réagir au laser ou d'être adaptée à une ablation ou un marquage par laser à tout moment du procédé de fabrication de la carte mais de préférence après lamination avec au moins une feuille ou couche de recouvrement 24c, 10c.
- De préférence, la structure comporte une feuille ou couche verso opaque 31 (sensiblement placé à l'emplacement de la feuille 10b de la figure 5). Elle est configurée afin de ne pas pouvoir détecter par transparence les numéros qui seront engravés sur la couche laser L1 ; La couche opaque 31 a notamment pour caractéristique ou fonction de ne pas transmettre la lumière (son coefficient de transmission de lumière est par exemple nul ou proche de zéro).
- La couche opaque 31 peut être noire et est de préférence à la dimension de la surface principale externe de la carte ; Les numéros ou autres informations de personnalisation) ne sont pas encore visibles lors de la lamination de la carte ; Ils seront rendus visibles après lamination notamment par ablation au laser ou marquage laser lors de l'étape de personnalisation dans la couche laser L1;
   La carte 1B peut comporter des couches internes 20c et 20d (sensiblement de même nature que les couches transparentes (overlay) 20a ou 20 b) de part et d'autre de la couche laser L1 ;
- La carte 1B comprend une couche recto 10c disposée sensiblement comme à la figure 5 mais elle est ici transparente à la lumière ou du moins bien translucide.
- L'écran 7b est configuré pour émettre de la lumière à travers la couche laser L1 (ou L2) quand il est activé notamment via le capteur d'empreintes digitales 9. L'affichage peut être issus de préférence d'une source luminescente.

La lumière générée est filtrée par la couche noire. Elle se diffuse uniquement à travers les zones de la couche non obstruées, c'est-à-dire les numéros ou informations 5, 6 ménagées dans la couche laser. Le cas échéant, un motif graphique quelconque ou logo (comme le motif 15 fig. 1) peut être ménagé dans la couche L1 par laser.
- Alternativement, l'écran est remplacé par une source d'au moins une lumière. Par exemple, la source peut comporter un écran AMOLED ou LED. Elle peut comprendre une ou plusieurs diodes LED. Par exemple, elle peut comprendre une source configurée pour diffuser à travers les informations 5, 6, 13. La source peut comprendre une diode LED avec un ou plusieurs guides d'onde transparents pour diffuser sous les informations en direction de la surface externe recto de la carte. Le guide d'onde peut permettre une diffusion de la lumière émise par la source de lumière notamment à 180°. La source peut comprendre un ou plusieurs dôme(s) ou lentille(s).

La source de lumière peut comprendre une diode LED sous chaque série de 4 chiffres composant le numéro de carte bancaire.

Les informations de personnalisation 5, 6, 13 peuvent être réalisées notamment de deux manières ci-après. Elles peuvent être formées par ablation de matière à des endroits correspondant aux informations, dans la couche L1. Alternativement, elles peuvent être formées dans une couche laser L2 transparente par noircissement des zones de la couche laser L2 autour des informations.

Les cartes peuvent ne pas comprendre de batterie (ou capacités) et être alimentées par champ électromagnétique via une antenne 21.

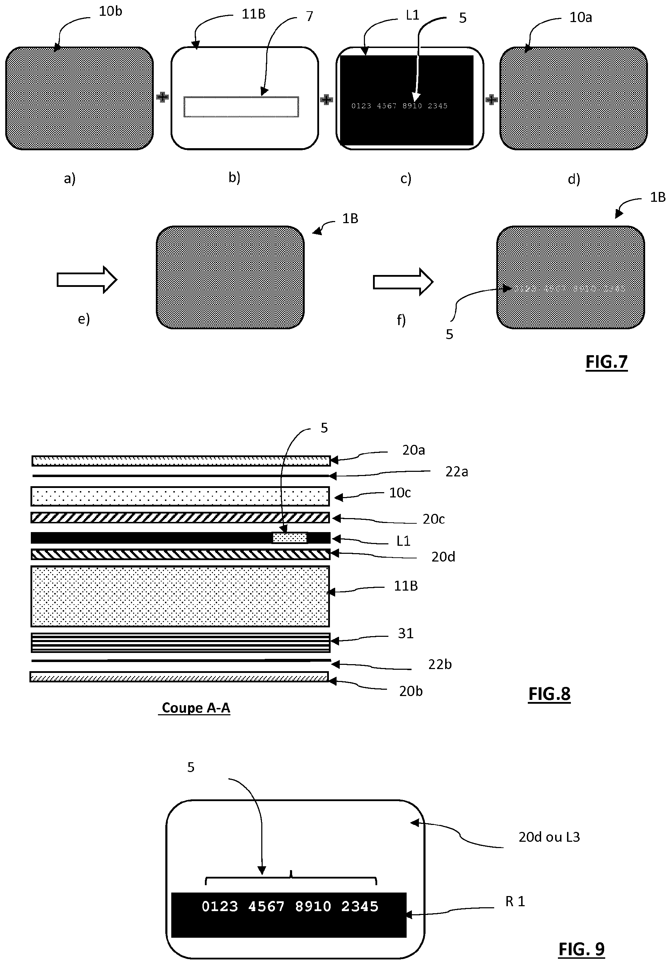

A la figure 7, les étapes de réalisation d'une carte conforme à l'invention et au mode de la figure 6 peut comprendre les étapes suivantes :
a) Fourniture d'une couche verso opaque (identique à couche 31) ;
b) Insertion au-dessus d'une couche comportant une source de lumière 7 (AMOLED ou autre) (identique ou similaire à la couche 11B) ;
c) Disposition au-dessus d'une couche noire opaque couvrant sensiblement la totalité ou du moins une majeure partie de la surface de la carte (identique ou similaire à la couche laser L1) ; Le marquage d'informations de personnalisation 5, 6, 13 de la couche L1 au sein de la carte et à travers la couche recto 10c peut s'effectuer de préférence à l'aide d'un laser ; Le marquage peut toutefois s'effectuer sur la couche laser L1 avant lamination comme sur l'exemple de la figure 7;
d) Disposition d'une couche recto de manière à cacher les numéros ou informations 5 réalisés dans la couche L1 avant ou après lamination de l'ensemble des couches. Le coefficient de transmission de lumière de la couche 10c peut être compris entre 0, 4 et 0 ,7 ;
e) A l'étape e, on obtient une carte conforme à l'invention d'apparence sans que des informations de personnalisation effectuée à l'intérieur de la carte dans la couche L1 ne soit visible de l'extérieur ;
f) A l'étape f, lors d'une authentification biométrique sur le capteur 9, la carte affiche l'information 5 à travers les couches disposées au-dessus de la couche L1.

Le cas échéant, la carte peut comprendre une couche 10c transparente (au lieu d'être partiellement transparente) et une seconde couche laser L3 (non représentée) disposée au-dessus de la première couche laser L1 dont la fonction est de permettre un noircissement par laser empêchant la visualisation à l'oeil nu sous éclairage ou exposition de lumière naturelle externe à la carte (ou dispositif).

Le procédé peut prévoir dans un premier temps d'effectuer le marquage en focalisant le laser sur une première couche laser L1 ou L2 puis d'effectuer un marquage opacifiant ou noircissant ou de camouflage par brouillage, sur la seconde couche laser L3.

Alternativement, la carte peut comprendre une impression 22a qui procure un effet similaire à la seconde couche laser L3 de masquage ou brouillage des informations 5, 6 voire 13.
De telles couches laser L3 ou impression de masquage ou de brouillage ou film à opacité contrôlée peuvent avantageusement chacune participer ensemble ou individuellement à conserver la confidentialité des informations du dispositif.

Dans cet exemple, l'écran 7 n'a pas besoin d'avoir un contrôleur graphique 30, une commande d'activation peut être suffisante même s'il est de type AMOLED.

A la figure 8 est illustrée une vue en coupe A-A de la carte de la figure 6. Ici la carte comprend une couche laser L1 entièrement noire ou opaque. Des informations 5 sont formées dans la couche L1 par ablation laser (enlèvement de matière).

Alternativement, la couche L1 peut être sensible au laser et devenir transparente ou opaque en réaction à une activation laser.

A la figure 9, la carte comporte une couche ou zone laser L2 qui est noircie sur une surface R1 s'étendant autour des informations 5 et à l'exceptions des informations. Cette couche L2 constitue une alternative à la couche laser L1 de la figure 6. La carte peut comprendre ce type de couche sur au moins une partie ou la totalité de la surface de la carte pour couvrir au moins les informations de personnalisation 5, 6, 13.
La couche à noircir par laser est une zone rectangulaire R1 de l'overlay laser de 55 µm d'épaisseur recouvrant sensiblement l'afficheur (ou écran) ou source lumineuse. Les zones non marquées correspondent aux numéros à rendre visible ou à afficher en surface du corps de carte.

L'écran (ou afficheur) AMOLED peut s'éclairer lorsque le lecteur d'empreinte 9 authentifie le doigt 19 de l'utilisateur de la carte. La lumière peut ainsi passer à travers la couche laser (ou overlay laser) configurée en filtre de lumière par le marquage laser de manière à ne laisser que les numéros apparaître à un observateur de la surface de la carte.

D'une manière générale dans tous les exemples, la carte peut comporter un film à opacité contrôlée électriquement ou équivalent. Ce film peut être disposé entre les informations marquées ou affichées dans la carte et une surface externe de la carte d'où les informations sont visibles, (par exemple la face externe recto de la carte.

Sur activation électrique du film notamment en réponse à une authentification biométrique ou autre action, son opacité peut diminuer de manière à laisser apparaitre les informations à travers le film.

Pour l'étape de personnalisation graphique (avec un film à opacité contrôlée et couche de marquage laser), le procédé prévoit d'activer le film à opacité contrôlée pour diminuer son opacité et permettre à un faisceau laser de passer à travers jusqu'à une couche de marquage disposée en-dessous.

Lors d'une phase de personnalisation graphique avec une carte conçue comme ci-dessus avec le film à opacité contrôlée, l'activation d'une baisse de l'opacité peut être commandée, par une instruction envoyée par un lecteur à un microcontrôleur 30 (ou autre) de pilotage de l'opacité par différents moyens comprenant notamment une instruction via les plages de contacts du module 4 ou via l'antenne radiofréquence 21.

Dans tous les modes de réalisation, la carte bancaire peut être alternativement un dispositif à feuilles ou couches superposées ou laminées ensemble à chaud ou à froid tel qu'une carte d'identité ou un passeport, badge ou carte de fidélité ou de santé ou d'accès ou de transport.

Ainsi, grâce aux dispositions de l'invention, le dispositif permet de rendre visible une information uniquement à des moments déterminés. La confidentialité des informations du dispositif en est améliorée.

Selon un autre mode de réalisation (non illustré), le dispositif peut comporter un ou plusieurs écrans réparti(s) dans une ou plusieurs cavités et laminé à froid. Par exemple, il peut y avoir un écran pour chaque série de quatre caractères composant le numéro de carte bancaire. Le dispositif peut comprendre un microcontrôleur d'affichage configuré pour piloter l'affichage sur plusieurs écrans en même temps ou séquentiellement.

Le dispositif peut comprendre une feuille (ou film ou couche) translucide par-dessus au moins un écran, d'environ 5 à 100 µm ou de 5 à 95 µm ; Cette dernière peut être associée avec une couche transparente de 95 à 5 µm selon le coefficient de transmission de lumière de la couche de recouvrement translucide ou partiellement opaque.

Ainsi, la surface de la carte peut être visuellement homogène notamment au niveau de la zone d'information. Quand au moins un écran (ou afficheur) n'est pas activé, la surface de la carte présente visuellement uniquement une personnalisation graphique ou une décoration qui n'est pas ou pratiquement pas interrompue par la zone d'information ou d'affichage ou des caractères.

Par ailleurs toute la surface de la carte peut être utilisée pour une personnalisation ou impression graphique ou une décoration, logo, etc.

## Revendications

1. Procédé de fabrication d'un dispositif (1, 1A, 1B) à puce électronique comprenant un corps en forme de carte et une zone d'information (Z1) dans le corps, contenant ou affichant des informations (5, 6) visibles depuis la surface du corps,
**caractérisé en ce que** ladite zone d'information (Z1) est recouverte par une couche (10) de matière, ladite couche (10)
- laissant passer partiellement la lumière ou
- recevant une personnalisation ou impression graphique s'étendant dans ladite zone d'information (Z1) et hors de ladite zone d'information.

2. Procédé selon la revendication précédente, **caractérisé en ce que** ladite zone d'information (Z1, R1) appartient :
- à un afficheur (7) disposé à l'aplomb d'une zone réservée de formation d'embossages ou de formation de numéros bancaires, le dispositif ou la zone réservée étant conforme à un standard de carte à puce bancaire, ou
- à une couche (L1, L2) de matière interne du corps du dispositif configurée ou agencée dans ledit corps de manière à recevoir un marquage par laser.

3. Procédé selon l'une des revendications précédentes, **caractérisé en ce que** le dispositif comporte une personnalisation graphique (15, 16) qui s'étend au moins en partie ou en totalité sur l'afficheur (7) ou sur ladite zone d'information.

4. Procédé selon l'une des revendications précédentes, **caractérisé en ce que** les numéros ou les informations (5) sont affichées électroniquement sur un afficheur.

5. Procédé selon l'une des revendications précédentes, **caractérisé en ce que** les informations (5) sont formées dans une couche de matière (L1, L2) au-dessus d'une source lumineuse (7).

6. Procédé selon la revendication précédente, **caractérisé en ce que** ladite couche (L1, L2) de matière est sensible au laser.

7. Procédé l'une des revendications précédentes, **caractérisé en ce que** le dispositif comporte un film à opacité contrôlée électriquement ou un second film laser (L3) pour brouillage ou opacité ou une impression graphique (22a) disposé(e) au-dessus des informations marquées ou affichées dans le dispositif.

8. Procédé selon l'une des revendications précédentes, **caractérisé en ce que** l'afficheur (7) est disposé sous une feuille (10) ou film de couverture recouvrant toute la surface du dispositif et de l'afficheur.

9. Procédé selon l'une des revendications précédentes, **caractérisé en ce que** l'afficheur (7) est affleurant à une surface principale externe (3) du corps du dispositif et **en ce qu'**un marquage de personnalisation s'étend à la fois sur l'afficheur et sur ladite surface principale externe (3) du corps de dispositif.

10. Procédé l'une des revendications précédentes, **caractérisé en ce que** l'afficheur est formé selon une technique AMOLED.

11. Procédé selon la revendication 8, **caractérisé en ce que** ladite feuille de couverture ou de recouvrement (10) est translucide.

12. Procédé selon la revendication 8, **caractérisé en ce que** ladite feuille de couverture ou de recouvrement (10) est opaque.

13. Procédé selon la revendication 8, **caractérisé en ce que** ladite feuille de couverture ou de recouvrement présente un coefficient de transmission de la lumière compris 0,4 et 1.

14. Dispositif (1, 1A, 1B) à puce électronique comprenant un corps en forme de carte et une zone d'information (9) dans le corps contenant ou affichant des informations (5, 6) visibles depuis la surface du corps, **caractérisé en ce que** ladite zone d'information appartient :
- à un afficheur (7) disposé à l'aplomb d'une zone réservée de formation de caractères embossés ou de formation de numéros bancaires, le dispositif ou la zone réservée étant conforme à un standard de carte à puce bancaire, ou
- à une couche (L1, L2) de matière interne du corps du dispositif configurée ou agencée dans ledit corps de manière à recevoir un marquage par laser.

15. Dispositif selon la revendication précédente, **caractérisée en ce que** le dispositif comporte une personnalisation graphique (15, 16) qui s'étend au moins en partie ou en totalité sur l'afficheur (7) ou sur ladite zone d'information.
